# EUROPEAN PATENT SPECIFICATION

(11) **EP 3 227 943 B1**
(45) Date of publication and mention of the grant of the patent: **18.03.2020**
(21) Application number: 15816811.2
(22) Date of filing: 02.12.2015
(51) Int. Cl.: H01M 4/1397, H01M 4/36, H01M 4/58, C01B 25/45, H01M 4/136

(54) **METHOD OF PRODUCING LITHIUM METAL PHOSPHATES**
VERFAHREN ZUR HERSTELLUNG VON LITHIUM-METALL-PHOSPHATEN
PROCÉDÉ PERMETTANT DE PRODUIRE DES PHOSPHATES MÉTALLIQUES DE LITHIUM

(30) Priority: 02.12.2014 FI 20146056
(43) Date of publication of application: 11.10.2017
(73) Proprietor: Keliber OY, 69600 Kaustinen (FI)
(72) Inventor: SIRÉN, Olle, 69600 Kaustinen (FI); TANSKANEN, Pekka A., 69600 Kaustinen (FI)
(74) Representative: Laine IP Oy
(86) International application number: PCT/FI2015/050844
(87) International publication number: WO 2016/087716

(56) References cited:
- WO-A1-2013/140039
- KR-A- 20140 090 954
- US-A- 2 840 455
- US-A1- 2006 115 410
- US-A1- 2011 104 553

## Description

### Technical Field

The present invention relates to lithium metal phosphates. In particular, the present invention concerns a method of producing lithium transition metal phosphates, such as lithium iron phosphate (LiFePO₄). The present invention also relates to carbon-coated lithium metal phosphates and to uses thereof.

### Background Art

The use of lithium iron phosphate as an electrode material is well-known in the art. It was first proposed for use as a cathode in lithium ion batteries by A. K. Padhi *et al.* and later on as a positive electrode for secondary lithium batteries in WO 02/099913.

Lithium metal phosphates can be synthesised by a number of methods, such as solid-phase synthesis, emulsion drying, sol-gel processing, solution coprecipitation, vapor phase deposition, electrochemical synthesis, electron beam irradiation, microwave processing, hydrothermal synthesis, ultrasonic pyrolysis, and spray pyrolysis, as discussed by Zhang *et al.*

Conventionally, a preferred source of lithium ions is lithium hydroxide. For example, WO 2014/004386 discloses a method in which lithium hydroxide is combined with other precursor materials including sources of transition metal ions, phosphate ions, carbonate, hydrogen carbonate, formate or acetate ions in water and a cosolvent to form a lithium transition metal phosphate.

Processes utilising diverse sources of lithium ions are also known in the art. Thus, US 2013/0047423 teaches a method of manufacturing lithium iron phosphate starting from lithium hydroxide monohydrate or lithium carbonate, iron tetrahydrate, and ammonium dihydrogen phosphate. Similarly, US 2011/0200508 discloses the use of purified lithium hydroxide for producing lithium iron phosphate.

CN 102496711 discloses a method in which a lithium carbonate solution is fed with carbon dioxide, and the resulting lithium bicarbonate solution is then reacted with a mixed solution of phosphoric acid and ferrous sulphate.

EP 2 612 839 discloses a method in which a lithium ion source, a divalent transition metal ion source and a phosphate ion source undergo a conversion reaction in the presence of a polar solvent to produce a lithium metal phosphate.

In the late 1990s it was discovered that the application of a carbon coating to lithium metal phosphates had beneficial effects to their uses as cathodic materials.

CN 1013982 discloses a method for preparing iron phosphate lithium coated with carbon in which an iron salt, a metallic compound, citric acid and a phosphorous compound are mixed in water and reacted to yield a precipitate. A carbon source and lithium are then added to the washed precipitate and reacted and baked to provide iron phosphate lithium coated with carbon.

A similar technology is described in an article by Liang et al. in Journal of Power Sources, February 2008.

In addition to carbon coatings various other coatings on lithium metal phosphates are known. For example US 2009/028772 relates to a method of coating lithium iron phosphate with an oxide carbon complex. Lu et al. disclose enhancement of F-doping on the electrochemical behaviour of carbon-coated LiFePO4 nanoparticles prepared by hydrothermal route in an article in Electrochimica Acta, July 2011.

US 2011/104553 discloses a method for producing lithium iron phosphate from lithium carbonate. The carbon-coated metal phosphate nanoparticulate materials can be prepared by reacting one or more solid, solvent-free precursor materials in an autogenic pressure reaction.

WO 2013/140039 discloses a method for recovering lithium carbonate from a raw material containing lithium, which method comprises pulping the raw material containing lithium in the presence of water and sodium carbonate for producing a slurry containing lithium.

After pulping the lithium-containing slurry is leached for dissolving the lithium in the solution thus producing a solution containing lithium carbonate. Solution containing lithium is carbonated by using carbon dioxide for producing a solution containing lithium bicarbonate and the solids are separated from the solution.

The main drawback associated with the existing techniques of producing carbon-coated lithium metal phosphates is the great number of steps required to carry out the processes. Production of precursors from natural resources is carried out in a separate process. For example, lithium hydroxide monohydrate, lithium hydroxide or lithium carbonate must be pre produced as solid chemicals. This leads to high investment, energy and material costs.

Thus, the complexity and inefficiency of the known processes make them expensive and undesirable, and result in an economically expensive carbon-coated lithium metal phosphate product.

### Summary of Invention

### Technical Problem

It is an aim of the present invention to provide a simplified method for the production of carbon-coated lithium metal phosphates.

It is a particular aim to provide a method for the production of coated lithium metal phosphates from an aqueous solution of a lithium raw material in a continuous process.

It is a further aim of the present invention to provide carbon-coated lithium metal phosphates.

It is still a further aim of the present invention to provide novel carbon-coated lithium metal phosphates and uses thereof.

### Solution to Problem

The present invention is based on the concept of producing lithium metal phosphates directly from lithium bicarbonate in an aqueous solution.

Lithium bicarbonate solutions are already at hand in industrial lithium processes. For example, suitable starting materials arise during separation and purification of intermediate process flows when lithium is leached from spodumene by sodium carbonate pressure leaching.

The aqueous lithium bicarbonate solution is preferably purified to high purity. The lithium compound can readily be converted to coated lithium metal phosphate by reacting with metal ions, phosphate ions and a carbon source in the solution. A precipitate is formed, which can be recovered and purified.

A lithium metal phosphate thus obtained exhibits a coating layer formed by the carbon source present in caramelized form. Such an intermediate product can then be subjected to calcination to convert the caramelized carbon source into a carbon coating.

More specifically, the method according to the present invention is characterized by what is stated in claim 1.

Use of the method for producing carbon-coated lithium metal phosphate of the present invention is characterized by what is stated in claim 16.

### Advantageous Effects of Invention

The invention provides several advantages. By means of the invention a carbon-coated lithium metal phosphate can be prepared from a lithium metal starting material (raw-material) in a process, for example a continuous process, without the need for converting the lithium material first to Li₂CO₃ or LiOH or other lithium compound, for example by precipitation, resulting in increased energy, time and material efficiency and lower investment and operational costs.

The lithium purified bicarbonate solution obtained can be used both for the production of the present lithium metal phosphates and also for the production of lithium carbonate. Thus, the process can be operated such as to produce lithium carbonate during a first period of time and then lithium metal phosphate during a second period of time and optionally to produce both lithium carbon and lithium metal phosphate during a third period of time. Such multipurpose operation ensures proper utilisation of the valuable lithium raw material, and it is economically advantageous.

The lithium metal phosphates of the present invention can be used in several applications of the electrochemical industry. In one embodiment, the carbon-coated lithium metal phosphate is used as cathode material in a battery.

In a further embodiment, the lithium metal phosphate coated with a layer formed by a caramelized source of carbon is used in the preparation of a lithium metal phosphate cathode.

In a further embodiment the cathodic material and/or the cathode is used in a battery comprising at least one electrochemical cell, said electrochemical cell comprising a cathode and an anode.

In a further embodiment, the method is used for producing carbon-coated lithium metal phosphate suitable as cathode material in a battery.

In a further embodiment, the lithium metal phosphate cathode is used in a battery comprising at least one electrochemical cell, said electrochemical cell comprising a cathode and an anode.

Not only does the method increase time and energy efficiency as mentioned above but it also increases material efficiency. Unreacted material can be recycled for further use in the method.

Other features and advantages will become apparent from the following description of preferred embodiments.

### Brief Description of Drawings

Figure 1 is an overview of an embodiment of a process of refining a lithium mineral raw-material to lithium chemicals by sodium carbonate leaching;
Figure 2 is a simplified process scheme of an embodiment of producing lithium transition metal phosphate from lithium bicarbonate according to the present technology; and
Figure 3 shows the XRD spectra for a product of Example 2.

### Description of Embodiments

In the present context, the term "bicarbonate" is used synonymously with "hydrogen carbonate".

"Caramelized", when used in respect of the carbon source, designates an intermediate processing state of the carbohydrate material, in which the carbohydrate material has reacted under the influence of heat such that its constituent compounds have undergone at least partial degradation and optionally oxidation to give a modified carbon source. Such a caramelized carbon source strongly bonds to a surface formed by lithium metal phosphate. The caramelized layer is carbonized, e.g. by pyrolysis, to form carbon.

The present invention relates to a method for producing carbon-coated lithium metal phosphate starting from a lithium bicarbonate solution prepared during, and preferably directly obtained from, an extraction process of lithium from natural minerals and other natural resources, or from an industrial purification process of pre-produced lithium carbonate.

The method generally comprises the steps of
- providing a solution containing lithium bicarbonate,
- reacting the lithium bicarbonate in the solution with metal ions, phosphate ions and a carbon source,
- separating the solids from the solution which contains, or which has contained lithium bicarbonate, by solid-liquid separation, and
- heat treating the solids to provide a coated lithium metal phosphate.

Such a coated lithium metal phosphate can then be heat treated directly to produce a carbon coating. Alternatively, the heat treatment can be carried out in two steps so as to first produce a lithium metal phosphate containing a coating of an intermediate conversion product of the carbon source, which is then converted into a carbon coating in a second heat treatment step.

Typically, the LiHCO₃ solution obtained by extraction of lithium from natural minerals and other resources is used directly for producing lithium transition metal phosphate LiMPO₄-C, which is suitable for use, for example as an electrode (e.g. cathode) in a battery. Thus, in preferred embodiments, the production of lithium transition metal phosphate LiMPO₄-C from the LiHCO₃ solution obtained by extraction of lithium raw-materials (lithium minerals) or by purification of an industrial grade lithium carbonate solution, does not involve a separate step wherein a solid material, typically lithium carbonate or lithium hydroxide, is prepared and optionally purified, and which solid material is the dissolved again.

According to a preferred embodiment, the lithium bicarbonate solution is obtained by purification of an industrial composition containing lithium carbonate by contacting it with carbon dioxide to dissolve lithium carbonate into aqueous phase in the form of lithium bicarbonate and optionally by separating any non-dissolved material.

Thus, to mention some examples, the lithium bicarbonate solution can be obtained
- by pressure dissolution of a lithium mineral with sodium carbonate, in particular in the form of a sodium carbonate solution, followed by treatment of the mother liquid with carbon dioxide,
- by extraction of a lithium mineral with a mineral acid to yield a lithium carbonate composition, which is treated with carbon dioxide to form a lithium bicarbonate solution, or
- by purification of an industrial grade lithium carbonate solution with carbon dioxide to form a high purity lithium bicarbonate solution.

Naturally, it is also possible to combine lithium bicarbonate solutions obtained from different sources.

In one embodiment, carbon-coated lithium metal phosphate is prepared from lithium bicarbonate obtained from lithium raw-materials, such as lithium mineral or industrial grade lithium carbonate, without an intervening conversion of the lithium bicarbonate to another lithium compound.

Typically, the lithium bicarbonate is purified in situ in the solution. The purified lithium bicarbonate is then converted to carbon-coated lithium metal phosphate.

The method can be carried out in one continuous process from the extraction of the lithium from raw material and preparation of the lithium bicarbonate solution up to the production and recovery of the coated lithium metal phosphate.

In one embodiment, the purification process of the product is also continuously carried out.

A particular feature of the present process is that the filtered and purified lithium bicarbonate solution is also useful for the production of lithium carbonate, which may have a purity of more than 99.9 % or even more than 99.99 %.

Thus, in one embodiment of the present technology, the process is used for simultaneous production of lithium transition metal phosphate and lithium carbonate utilizing the same intermediate aqueous bicarbonate solution. A part of the solution is used for producing the phosphate by reaction with suitable metal and carbon sources, whereas another part is used for producing lithium carbonate by crystallization and drying. The weight ratios between the two components produced (lithium transition metal phosphate/lithium carbonate) can vary between 1:100 to 100:1 depending on the actual commercial demand for particular compounds.

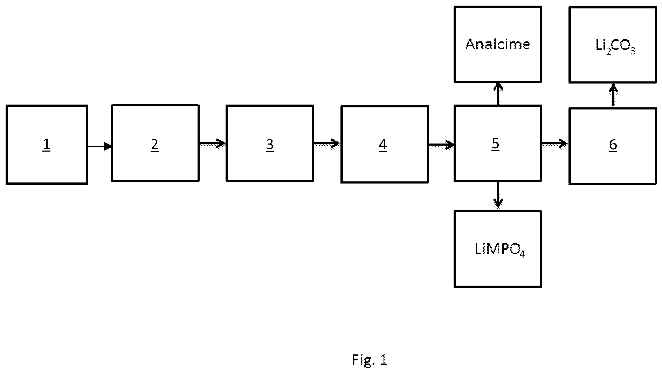

Figure 1 gives an overview of the process of producing Li₂CO₃ and LiMPO₄.

As will appear from the scheme, the process comprises a number of steps (1 to 5), which in combination will produce not only lithium metal phosphate but also, as important sidestreams, analcime and lithium carbonate.

In Figure 1, reference numeral 1 refers collectively to the various processing steps needed to provide a raw-material suitable for extraction of lithium for the preparation of lithium carbonate and lithium bicarbonate.

The starting material of the present process, i.e. the raw material for the lithium compound, can be any lithium containing mineral, such as spodumene, petalite, lepidolite or mixtures thereof. Also natural lithium containing brines can be used as raw materials. Spodumene is preferred in view of its relatively high content of lithium and ease of processing by leaching. Further, industrial grade low purity lithium carbonate can also be obtained.

The processing steps 1 typically include mining and crushing, concentration by gravimetric and magnetic separation, grinding and flotation. During the above-described process can also include an optional step of changing the crystal form of the lithium mineral. Thus, one of the preferred raw-materials is spodumene which occurs in nature as monoclinic alfa-spodumene. For further processing, before leaching, the alfa-form needs to be converted into tetragonal beta-spodumene. This can for example be carried out by heating the alfa-spodumene or concentrate of alfa-spodumene to a temperature of approximately 1000-1100 °C for a suitable period of time in a rotational furnace or fluidized bed reactor.

The mined, crushed, ground and concentrated raw material is then pulped 2 in water for producing a slurry. The lithium raw material is leached or extracted from the suspended solid matter to yield a suitable lithium compound, such as lithium carbonate, which in turn can be used for further processing. In the present case, the lithium carbonate is used for producing lithium bicarbonate but, in addition, it can be used for production of other lithium compounds.

The leaching or extraction of the starting material can be carried out with sodium carbonate by pressure leaching or by using a strong mineral acid, such as sulphuric acid. A solution suitable for further treatment can also be obtained by an extraction process.

The leaching can be carried out as a batch process, or preferably as a continuously operated process.

In the case of spodumene, the leaching of a slurry containing lithium can be performed in an autoclave or in a cascade of autoclaves in the presence of sodium carbonate and highpressure steam. Leaching is typically performed at a temperature of 160 to 250 °C. The presence of sodium carbonate and the process conditions give rise to the formation of lithium carbonate. The reaction can be depicted with formula I:

2 LiAI(SiO₃)₂+ Na₂CO₃+ H₂O → 2NaAI(SiO₃)₂·H₂O + Li₂CO₃ I

NaAI(SiO₃)₂·H₂O, also known as analcime, is a zeolite-like crystal material. It is separated by filtering and can be recovered. Analcime can be used for example as a chemical filter material.

The lithium carbonate is preferably purified 3 before conversion into lithium bicarbonate. In one embodiment, during the purification, lithium is kept dissolved in water with the aid of pressurized CO₂ gas mixed in the solution.

Lithium bicarbonate can be produced from the lithium carbonate by reacting the carbonate with carbon dioxide according to formula II

Li₂CO₃+CO₂+H₂O→2 LiHCO₃ II

Carbonation according to formula II of a solution of lithium carbonate is preferably performed using carbon dioxide in an excess amount. According to one embodiment of the present invention the carbonation of the solution containing lithium carbonate is performed at ambient temperature, typically at a temperature of 5 to 40 °C. According to an embodiment of the present invention the carbonation of the solution containing lithium carbonate is performed under atmospheric pressure.

Various process applications are possible. Thus, carbonation of lithium carbonate can be performed by feeding the carbon dioxide counter-currently with respect to the flow direction of the solution containing lithium carbonate.

As mentioned above, the lithium bicarbonate solution, in particular when produced from spodumene, has the attractive feature that it can be purified to a high purity.

Thus, after carbonation, solids are separated from the solution containing lithium bicarbonate by any suitable solid-liquid separation method. Examples of separation methods include thickening, filtering and combinations thereof.

Purification of the lithium bicarbonate solution is then typically continued with ion exchange, for example using cation exchange resin. Preferably trivalent or divalent metal ions, such as calcium, magnesium, aluminium and iron, or combinations thereof, are used. In addition to solution purification by ion exchange stages, a proper purification process includes the regeneration of impurity metals bound to the resin. It typically comprises washing the resin with water, elution with acid solution, washing with water, and neutralisation with an alkali solution, such as sodium hydroxide solution, and washing with water.

A suitable method is disclosed in WO 2010/103173.

After the purifying step, the lithium bicarbonate can be subjected to a reaction step, as disclosed below, for producing lithium metal phosphate. However, it is also possible to recover lithium carbonate of high purity by crystallization thereof. The lithium bicarbonate containing solution is heated in a crystallization unit 6 and a lithium carbonate precipitate is formed according to the reaction III

2 LiHCO₃ +heat = Li₂CO₃+ CO₂+ H₂O III

Lithium bicarbonate can also originate from pre-produced solid Li₂CO₃ chemical, dissolved in water with the aid of pressurized CO₂ gas to form LiHCO₃ water solution. The production of lithium carbonate by crystallization from a purified lithium bicarbonate solution is discussed in WO 2013/140039 A.

In an embodiment, the separated solution containing lithium bicarbonate is purified by distillation. A purified solution containing lithium bicarbonate is thus obtained. Lithium carbonate crystals can be recovered from the purified solution containing lithium bicarbonate by crystallization.

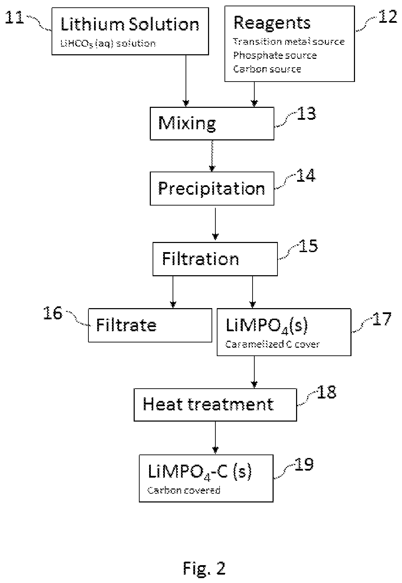

Figure 2 depicts a simplified flow scheme of a process according to the present technology for producing lithium transition metal phosphate from the purified lithium bicarbonate solution.

Reference numeral 11 refers to the starting material of the lithium reactant, viz. the purified lithium bicarbonate solution. And reference numeral 12 refers to the reagents, viz. transition metal source, phosphate source and carbon source.

The lithium solution 11 contains water, carbon dioxide and a lithium source. The lithium source of the aqueous solution, lithium hydrogen carbonate, can also be designated: " LiHCO₃ (aq)". The abbreviation "aq" indicates that the lithium bicarbonate is dissolved in the aqueous solution which contains at least residues of dissolved carbon dioxide gas.

The reagent mixture 12 contains one or more transition metal sources, one or more phosphate sources and at least one carbon source.

The metal ions can be obtained from compounds selected from the group consisting of metal phosphates, metal sulphates, metal oxides, metal nitrates, metal nitrites, metal sulphites, metal halides, metal carbonates and mixtures thereof.

In a further embodiment, the metal ions are transition metal ions, preferably iron ions.

The transition metal source is typically iron sulphate (FeSO₄) or manganese sulphate (MnSO₄) or any other transition metal sulfate (MSO₄, wherein M stands for transition metal) and mixtures thereof.

The phosphate source is typically a compound selected from the group consisting of metal phosphates, phosphoric acid and mixtures thereof, phosphoric acid (H₃PO₄) being particularly preferred.

Diverse sources of carbon can be used in the method ranging from mineral sources to various biological sources. In an embodiment the carbon source is selected from the group consisting of glucose, fructose, sucrose, maltose, dextrose, saccharose, ascorbic acid, pantothenic acid, sodium ascorbate, calcium ascorbate, potassium ascorbate, ascorbyl palmitate, ascorbyl stearate, pteroic acid, paraminobenzoic acid, glutamic acid, pteroylglutamic acid and mixtures thereof. These sources of carbon have the added advantage that they are inexpensive, easy to handle and no pretreatment is required before use in the method of the present invention.

In preferred embodiments, the carbon source is selected from glucose (C₆H₁₂O₆), citric acid (C₆H₈O₇), and ascorbic acid (C₆H₈O₆) and mixtures thereof.

In a further embodiment, the carbon source is present in an amount of 10 to 60 wt % of the metal ions, preferably 20 to 55 wt % of the metal ions, suitably 25 to 45 wt % of the metal ions, particularly 40 wt % of the metal ions.

The lithium bicarbonate solution is mixed with the reagent mixture at step 13. Mixing can be made in a reaction vessel or autoclave 14. Reagents are added into lithium solution slowly, for preventing excessive gasification of CO₂. The pH of the solution will be changing to about 4.5 by the addition of the reagents.

The reaction is typically carried out at a pH in excess of 7, preferably at a pH less than 14.

In one embodiment, the pH is increased by addition of an alkali or a base selected from the group of ammonia, metal hydroxides, metal oxides or a mixture thereof. By addition of ammonia (NH₃) pH will be increased to about 9. Increasing the pH of the reaction provides the added benefit of increasing the rate of reaction.

The addition of an alkali or base causes Li₃PO₄(OH) to precipitate as a turquoise coloured sediment.

During the addition of the reactants, carbon dioxide is released from the solution as the lithium begins to react with the phosphate ions to form Li₃PO₄.

After formation of Li₃PO₄(OH) the reactor is sealed and pressurised to overpressure with an inert gas, such as carbon dioxide or nitrogen, for preventing oxidation of the reagents.

The reaction to produce lithium transition metal phosphate LiMPO₄-C is realized at a temperature in excess of 130 °C, preferably at 130 to 220 °C, for example 140-200 °C, e.g. about 170 °C, and at a pressure in excess of 5 bar, preferably at a pressure in the range of 6 to 20 bar, in particular at a pressure of 12-16 bar. Reaction time is typically can be 3-24 hours, preferably 3-6 hours.

The temperature of the reaction is related to the carbon source employed, the elevated temperature causing the carbon source to caramelize on the lithium metal phosphate. The temperature of the reaction is also related to reaction pressure.

In a particular embodiment, the reaction temperature is set at 160 °C or more, up to about 200 °C, in order to caramelize the carbon source material as a thin cover on the lithium transition metal phosphate LiMPO₄.

The lithium metal phosphate (LIMPO₄) is precipitated in the form of granules or grains, which are covered by the caramelized carbon source material.

The reaction mixture is subjected to filtration 15 to yield a leachate 16 and solid lithium transition metal phosphate LiMPO₄-C 19. Filtration is typically carried out at an elevated temperature of 50 up to 90 °C, e.g. 80° C, and protective N₂ atmosphere.

The LiMPO₄ thus obtained is separated from the solution, which can undergo recycling.

Lithium transition metal phosphate covered with caramelized carbon source 17 will be heat treated (for example pyrolyzed) in a furnace 18 to provide a carbon-coated lithium metal phosphate. During the heat treatment the caramelized carbon source is transformed into amorphous carbon.

The amorphous carbon cover will increase electronic conductivity of the lithium transition metal phosphate material.

Steps 13, 14, 15 and optionally 17 and optionally 18 are preferably carried out in equipment capable of continuous operation.

By the present method, carbon-coated lithium metal phosphates of high purity can be produced.

The carbon coating is formed primarily or exclusively by the carbon source present in the reaction mixture.

One embodiment of the invention comprises a lithium metal phosphate coated with a layer formed by a caramelized source of carbon. The caramelized carbon is present in an amount of at least 1 wt%, typically about 1.5 to 30 wt%, of the lithium metal phosphate.

The lithium metal phosphate with a caramelized carbon covering is a novel intermediate unknown in the art.

As stated above, the caramelized carbon is subsequently subjected to carbonization to provide a layer primarily composed of carbon (carbonaceous residue of the carbon source). Thus, in an embodiment, the caramelized carbon coating is burnt, preferably in a reducing gas atmosphere, and during the heat treatment the temperature is in excess of 400 °C, particularly in excess of 500 °C, suitably in excess of 600 °C, most suitably at about 650 °C, typically at not more than 1200 °C, to provide a carbon coated lithium metal phosphate.

The carbon coated lithium metal phosphate typically has a carbon content of up to 10 wt%, preferably 5 wt% or less, for example about 0.01 to 2.5 wt%.

Based on the above, the following embodiments are illustrative:
1. A method for producing carbon-coated lithium metal phosphate comprising
   - providing a solution containing purified lithium bicarbonate,
   - reacting the lithium bicarbonate in the solution with metal ions, phosphate ions and a carbon source to produce a solid precipitate;
   - separating the solids from the solution containing lithium bicarbonate by solid-liquid separation; and
   - heat treating the solids to provide a carbon coated lithium metal phosphate.
2. The method according to embodiment 1, wherein the lithium bicarbonate solution is obtained by purification of an industrial lithium carbonate composition by contacting it with carbon dioxide to dissolve lithium carbonate into aqueous phase as lithium bicarbonate and optionally by separating any non-dissolved material.
3. The method according to embodiment 1 or 2, wherein the lithium bicarbonate solution is obtained
   - by pressure dissolution of a lithium mineral with sodium carbonate, the lithium bicarbonate solution being recovered after separation and purification using carbon dioxide,
   - by extraction of a lithium mineral with a mineral acid to yield a lithium carbonate composition, which is treated with carbon dioxide to form a lithium bicarbonate solution, or
   - by purification of an industrial grade lithium carbonate solution with carbon dioxide to form a high purity lithium bicarbonate solution.
4. The method according to any of the preceding embodiments, wherein the lithium bicarbonate is obtained from spodumene, petalite, lepidolite or mixtures thereof, or natural lithium containing brines, in particular spodumene.
5. The method according to any of the preceding embodiments, wherein the lithium bicarbonate solution is obtained from the production of a lithium chemical from spodumene, wherein lithium carbonate is dissolved in aqueous solution with carbon dioxide to allow for the separation of analcime and optionally for the purification of the remaining lithium compounds.

The following non-limiting examples illustrate the invention:

### Example 1

Li₂CO₃ was dissolved in water (about 2 g/70 ml H₂O) under pressurised CO₂ (lObar) in an autoclave to prepare a LiHCO₃ solution. At the same time, to a round-bottomed flask containing H₂O (25ml), in a nitrogen atmosphere was added FeSO₄·7H₂0 (12.38 g), H₃PO₄ solution (85 %)(3.2 ml) and a source of carbon / reducing agent glucose (6 g) and ascorbic acid (1g). The LiHCO₃ solution was pipetted into the round-bottomed flask with stirring until the lithium was present in a stoichiometric excess of about 20 %. An aqueous solution of ammonia (25 %, 25 ml) and a surfactant (IGEPAL® CA-630) (0.1 ml) were added to the round-bottomed flask. The formed slurry was poured into the autoclave reactor and reacted in CO₂ at 170 °C for 3 h. The contents were cooled. The solids were separated from the solution by suction and dried under vacuum at 40 °C. The solids were heat treated at 700 °C for 3h under nitrogen. Resultant particles were graded to smaller than a diameter of 40 µm to yield LiFePO₄ (94.2 %).

### Example 2

5.00 g Li₂CO₃ was dissolved in a first step (Step 1) in 75 ml distilled water at a CO₂-pressure of 10 bar during two hours.

In Step 2, 12.40 g FeSO₄, 0.20 g ascorbic acid and 1.00 g glucose was dissolved in 50 ml distilled water (N₂ was bubbled through that water for about 20 minutes before addition on reagents in order to reduce the concentration of dissolved oxygen). Then, 3.2 ml H₃PO₄ at a concentration of 85 % was added.

In Step 3, the lithiumbicarbonate solution of Step 1 was added to the iron solution of Step 2 and the autoclave was closed. In order to discharge oxygen, the autoclave was flushed with nnitrogen for about five minutes before the autoclave was closed and heating initiated. The autoclave was heated at 170 °C and maintained at that temperature of 21 hours.

The autoclave was then cooled in Step 4 using circulating water to room temperature and the reaction product was filtered and washed with distilled water. The product was dried in a vacuum oven at 60 °C for a day.

In Step 5, the dried product was heat treated in a CVD oven in a gas atmosphere of Ar-H₂(5 %) at a temperature of 675 °C for four hours, whereby the glucose caramelized on the surface of the lithium ferrophosphate (LFP) was reduced to elemental carbon.

Electrochemical testing of the prepared produced was carried out in a semicell of Li. The composition of the cathode was 85 % active substance (LFP), 10 % of conductive carbon, and 5 % of a binder (PVDF).

The specific discharge capacity of the cathode was at different currents:
0.03 C: 140.6 mAh/g
0.2 C: 128.5 mAh/g
5 C: 87.6 mAh/g

As will appear from the above, no ammonia (NH₃) was used at all.

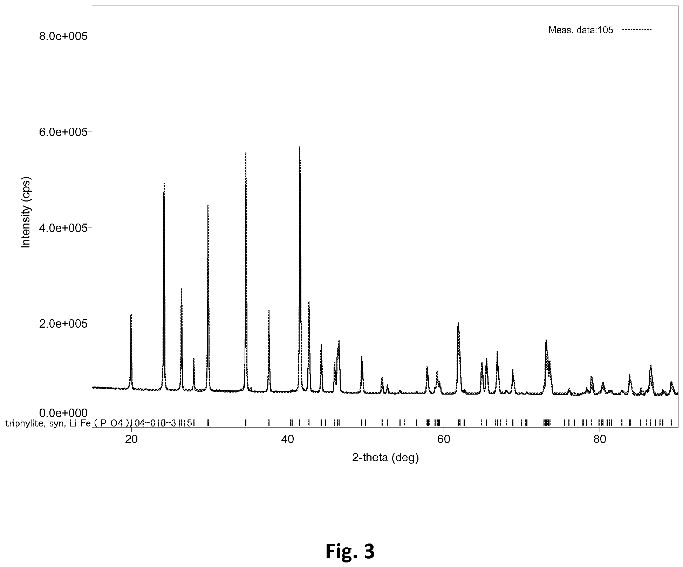

Figure 3 contains data obtained by XRD on the material. The analysis was carried out with a Rigaku SmartLab x-ray diffractometer (using Co-K-alfa radiation)

In a second test, after mixing in Step 3 of the lithium bicarbonate solution of Step 1 and the iron solution of Step 2, 2 ml of an aqueous ammonia solution (25 %) was added in Step 3.

Then the specific discharge capacity of LFP was, at different currents:
0.03 C: 144.4 mAh/g;
0.2 C: 118.8 mAh/g;
5 C: 69.8 mAh/g.

### List of Reference Signs

1 mining, crushing, grinding and concentration
2 conversion of crystal structure
3 pressure leaching
4 CO₂ treatment
5 filtration and purification
6 crystallization and drying
11 lithium solution
12 reagents
13 mixing
14 precipitation
15 filtration
16 filtrate
17 lithium metal phosphate
18 heat treatment
19 lithium metal phosphate covered with carbon

### Industrial Applicability

The present invention finds applications in the chemical industry e.g. in the preparation of lithium ion cathode chemicals for the electrochemical industry, e.g. for the preparation of lithium ion batteries for use in diverse applications, such as in electric vehicles, in batteries and battery banks for the storage of energy harnessed from the sun, waves or wind, from tidal energy and from hydroelectric power plants, or indeed any power plants.

### Citation List

### Patent Literature

CN 102496711
US 2013047423
EP 2612839
CN 1013982
US 2009028772
WO 2014004386
WO 02/099913
US 2011200508

### Non Patent Literature

A. K. Padhi, K. S. Nanjundaswamy, and J. B. Goodenough, J. Electrochem. Soc., 144 (1996) 1188-1194.
Y. Zhang, Q. Huo, P. Du, L. Wang, A. Zhang, Y. Song, Y. Lv, G. Li, Synthetic Metals 162 (2012) 1315-1326.
G. Liang, L. Wang, X. Ou, X Zhao, and S. Xu, Journal of Power Sources, 184 (2008), p. 538-542.
F. Lu, Y. Zhou, J. Liu, and Y. Pan, Electrochimica Acta, 56 (2011), p. 8833-8838.

## Claims

1. A method for producing carbon-coated lithium metal phosphate comprising
- providing a solution containing purified lithium bicarbonate,
- reacting the lithium bicarbonate in the solution with metal ions, phosphate ions and a carbon source to produce a solid precipitate;
- separating the solids from the solution by solid-liquid separation; and
- heat treating the solids to provide a carbon coated lithium metal phosphate.

2. The method according to claim 1, wherein the lithium bicarbonate solution is obtained by purification of an industrial lithium carbonate composition by contacting it with carbon dioxide to dissolve lithium carbonate into aqueous phase as lithium bicarbonate and optionally by separating any non-dissolved material.

3. The method according to claim 1 or 2, wherein the lithium bicarbonate solution is obtained
- by pressure dissolution of a lithium mineral with a sodium carbonate solution, the lithium bicarbonate solution being recovered after separation and purification using carbon dioxide,
- by extraction of a lithium mineral with a mineral acid to yield a lithium carbonate composition, which is treated with carbon dioxide to form a lithium bicarbonate solution, or
- by purification of an industrial grade lithium carbonate solution with carbon dioxide to form a high purity lithium bicarbonate solution.

4. The method according to any of the preceding claims, wherein the lithium bicarbonate is obtained from spodumene, petalite, lepidolite or mixtures thereof, or natural lithium containing brines, in particular spodumene.

5. The method according to any of the preceding claims, wherein the lithium bicarbonate solution is obtained from the production of a lithium chemical from spodumene, wherein lithium carbonate is dissolved in aqueous solution with carbon dioxide to allow for the separation of analcime and optionally for the purification of the remaining lithium compounds.

6. The method according to any of the preceding claims, wherein the metal ions are obtained from compounds selected from the group consisting of metal phosphates, metal sulphates, metal oxides, metal nitrates, metal nitrites, metal sulphites, metal halides, metal carbonates and mixtures thereof, wherein the metal ions are transition metal ions, preferably iron ions, and
wherein the phosphate ions are preferably obtained from compounds selected from the group consisting of metal phosphates, phosphoric acid and mixtures thereof.

7. The method according to any of the preceding claims, wherein the carbon source is selected from the group consisting of glucose, fructose, sucrose, maltose, dextrose, saccharose, ascorbic acid, pantothenic acid, sodium ascorbate, calcium ascorbate, potassium ascorbate, ascorbyl palmitate, ascorbyl stearate, pteroic acid, paraminobenzoic acid, glutamic acid, pteroylglutamic acid and mixtures thereof,
the carbon source being present in an amount sufficient to provide the lithium metal phosphate with the carbon coating, in particular with all of the carbon of the coating.

8. The method according to any of the preceding claims, wherein the carbon source is present in an amount of 10 to 60 wt % of the metal ions, preferably 20 to 55 wt % of the metal ions, suitably 25 to 45 wt % of the metal ions, particularly 40 wt % of the metal ions.

9. The method according to any of the preceding claims, wherein the reacting is carried out at a temperature in aqueous phase at a temperature in excess of 130, preferably at 140-200 °C and wherein the reacting is preferably carried out at a pressure in excess of 5 bar, for example at a pressure in the range of 6 to 20 bar, particularly at a pressure of about 10 bar.

10. The method according to any of the preceding claims, wherein the reacting is carried out at a pH in excess of 7, preferably at a pH less than 14, typically at 7.5 to 12, the pH optionally being increased by addition of an alkali or a base selected from the group of ammonia, metal hydroxides, metal oxides or a mixture thereof.

11. The method according to any of the preceding claims, wherein the separated solution containing lithium bicarbonate is purified by filtration producing a purified solution containing lithium bicarbonate and lithium carbonate crystals are recovered from the purified solution containing lithium bicarbonate by crystallization.

12. The method according to any of the preceding claims, wherein the carbon covering on the lithium transition metal phosphate is caramelized during reacting to provide a caramelized carbon covering, and the caramelized carbon covering is burnt during the heat treatment at a temperature in excess of 400 °C, particularly in excess of 500 °C, suitably in excess of 600 °C, most suitably at about 650 °C, typically at not more than 1200 °C, to provide a carbon coated lithium metal phosphate.

13. The method according to any of the preceding claims, wherein at least one, preferably all of the steps of
- providing a solution containing purified lithium bicarbonate,
- reacting the lithium bicarbonate in the solution with metal ions, phosphate ions and a carbon source to produce a solid precipitate,
- separating the solids from the solution containing lithium bicarbonate by solid-liquid separation, and optionally
- heat treating the solids to provide a carbon coated lithium metal phosphate, are carried out in the form of a continuous process.

14. The method according to any of the preceding claims, wherein the lithium bicarbonate solution is
- obtained by extraction of lithium raw-materials or by purification of an industrial grade lithium carbonate solution, and
- the lithium bicarbonate solution thus obtained is used as such, optionally after purification, for preparation of carbon-coated lithium metal phosphate.

15. The method according to any of the preceding claims, wherein carbon-coated lithium metal phosphate is prepared from lithium bicarbonate obtained from lithium raw-materials without an intervening conversion of the lithium bicarbonate to another lithium compound, for example by precipitation.

16. Use of a method according to any of claims 1 to 15 for producing carbon-coated lithium metal phosphate suitable as cathode material in a battery.

## Patentansprüche

1. Erzeugungsverfahren für kohlenstoffbeschichtetes Lithiummetallphosphat, umfassend:
- Bereitstellen einer Lösung, welche gereinigtes Lithiumhydrogencarbonat enthält,
- Reagieren des Lithiumhydrogencarbonats in der Lösung mit Metallionen, Phosphationen und einer Kohlenstoffquelle, um ein festes Präzipitat zu erzeugen;
- Trennen der Festkörper von der Lösung durch Abscheiden von Feststoffen aus Flüssigkeiten; und
- Wärmebehandeln der Festkörper, um ein kohlenstoffbeschichtetes Lithiummetallphosphat bereitzustellen.

2. Verfahren nach Anspruch 1, wobei die Lithiumhydrogencarbonatlösung durch Reinigung einer industriellen Lithiumcarbonatzusammensetzung durch Kontaktieren mit Kohlendioxid, um Lithiumcarbonat in wässrige Phase als Lithiumhydrogencarbonat aufzulösen, und optional durch Trennen allfälliger nicht gelöster Materialien erhalten wird.

3. Verfahren nach Anspruch 1 oder 2, wobei die Lithiumhydrogencarbonatlösung erhalten wird
- durch Auflösung eines Lithiumminerals mit einer Natriumcarbonatlösung unter Druck, wobei die Lithiumhydrogencarbonatlösung nach Trennung und Reinigung unter Verwendung von Kohlendioxid rückgewonnen wird,
- durch Extraktion eines Lithiumminerals mit einer Mineralsäure, um eine Lithiumcarbonatzusammensetzung zu erhalten, welche mit Kohlendioxid behandelt wird, um eine Lithiumhydrogencarbonatlösung zu bilden, oder
- durch Reinigung einer Lithiumcarbonatlösung in Industriequalität mit Kohlendioxid, um eine Lithiumhydrogencarbonatlösung mit hoher Reinheit zu bilden.

4. Verfahren nach einem der vorstehenden Ansprüche, wobei das Lithiumhydrogencarbonat aus Spodumen, Petalit, Lepidolith oder Gemischen davon, oder natürlichem Lithium, welches Salzlauge enthält, insbesondere Spodumen, erhalten wird.

5. Verfahren nach einem der vorstehenden Ansprüche, wobei die Lithiumhydrogencarbonatlösung aus der Erzeugung einer Lithiumchemikalie aus Spodumen erhalten wird, wobei Lithiumcarbonat in wässriger Lösung mit Kohlendioxid aufgelöst wird, um die Trennung von Analcim und optional die Reinigung der verbleibenden Lithiumbestandteile zu erlauben.

6. Verfahren nach einem der vorstehenden Ansprüche, wobei die Metallionen aus Bestandteilen erhalten werden, welche ausgewählt sind aus der Gruppe, bestehend aus Metallphosphaten, Metallsulfaten, Metalloxiden, Metallnitraten, Metallnitriten, Metallsulfiten, Metallhaliden, Metallcarbonaten und Gemischen davon, wobei die Metallionen Übergangsmetallionen, bevorzugt Eisenionen sind, und
wobei die Phosphationen bevorzugt aus Bestandteilen erhalten werden, welche ausgewählt sind aus der Gruppe, bestehend aus Metallphosphaten, Phosphorsäure und Gemischen davon.

7. Verfahren nach einem der vorstehenden Ansprüche, wobei die Kohlenstoffquelle ausgewählt ist aus der Gruppe, bestehend aus Glukose, Fruktose, Sucrose, Maltose, Dextrose, Saccharose, Ascorbinsäure, Pantothensäure, Natriumascorbat, Calciumascorbat, Kaliumascorbat, Ascorbylpalmitat, Ascorbylstearat, Pteroinsäure, Paraminobenzoesäure, Glutaminsäure, Pteroylglutaminsäure und Gemischen davon,
wobei die Kohlenstoffquelle in einer Menge vorhanden ist, welche ausreicht, um die Kohlenstoffbeschichtung, insbesondere den gesamten Kohlenstoff der Beschichtung für das Lithiummetallphosphat bereitzustellen.

8. Verfahren nach einem der vorstehenden Ansprüche, wobei die Kohlenstoffquelle in einer Menge von 10 bis 60 Gew.-% der Metallionen, bevorzugt 20 bis 55 Gew.-% der Metallionen, geeignet 25 bis 45 Gew.-% der Metallionen, insbesondere 40 Gew.-% der Metallionen vorhanden ist.

9. Verfahren nach einem der vorstehenden Ansprüche, wobei das Reagieren bei einer Temperatur in wässriger Phase bei einer Temperatur über 130, bevorzugt bei 140-200 °C ausgeführt wird, und wobei das Reagieren bevorzugt bei einem Druck über 5 bar, beispielsweise bei einem Druck in dem Bereich von 6 bis 20 bar, insbesondere bei einem Druck von etwa 10 bar ausgeführt wird.

10. Verfahren nach einem der vorstehenden Ansprüche, wobei das Reagieren bei einem pH über 7, bevorzugt bei einem pH unter 14, typisch bei 7,5 bis 12 ausgeführt wird, wobei der pH optional durch Hinzufügen eines Alkali oder einer Base, ausgewählt aus der Gruppe, bestehend aus Ammoniak, Metallhydroxiden, Metalloxiden oder einem Gemisch davon erhöht wird.

11. Verfahren nach einem der vorstehenden Ansprüche, wobei die getrennte Lösung, welche Lithiumhydrogencarbonat enthält, durch Filtration gereinigt wird, welche eine gereinigte Lösung erzeugt, welche Lithiumhydrogencarbonat enthält, und Lithiumcarbonatkristalle aus der gereinigten Lösung, welche Lithiumhydrogencarbonat enthält, durch Kristallisation rückgewonnen werden.

12. Verfahren nach einem der vorstehenden Ansprüche, wobei die Kohlenstoffbeschichtung auf dem Lithiumübergangsmetallphosphat während der Reaktion karamellisiert wird, um eine karamellisierte Kohlenstoffbeschichtung bereitzustellen, und die karamellisierte Kohlenstoffbeschichtung während der Wärmebehandlung bei einer Temperatur über 400 °C, insbesondere über 500 °C, geeignet über 600 °C, am geeignetsten bei etwa 650 °C, typisch nicht über 1200 °C gebrannt wird, um ein kohlenstoffbeschichtetes Lithiummetallphosphat bereitzustellen.

13. Verfahren nach einem der vorstehenden Ansprüche, wobei zumindest einer, bevorzugt alle der Schritte:
- Bereitstellen einer Lösung, welche gereinigtes Lithiumhydrogencarbonat enthält,
- Reagieren des Lithiumhydrogencarbonats in der Lösung mit Metallionen, Phosphationen und einer Kohlenstoffquelle, um ein festes Präzipitat zu erzeugen,
- Trennen der Festkörper von der Lösung, welche Lithiumhydrogencarbonat enthält, durch Abscheiden von Feststoffen aus Flüssigkeiten, und optional
- Wärmebehandeln der Festkörper, um ein kohlenstoffbeschichtetes Lithiummetallphosphat bereitzustellen, in der Form eines fortlaufenden Prozesses ausgeführt werden.

14. Verfahren nach einem der vorstehenden Ansprüche, wobei die Lithiumhydrogencarbonatlösung
- durch Extraktion von Lithiumrohmaterialien oder durch Reinigung einer Lithiumcarbonatlösung in Industriequalität erhalten wird, und
- die dadurch erhaltene Lithiumhydrogencarbonatlösung an sich, optional nach Reinigung, zur Herstellung von kohlenstoffbeschichtetem Lithiummetallphosphat verwendet wird.

15. Verfahren nach einem der vorstehenden Ansprüche, wobei kohlenstoffbeschichtetes Lithiummetallphosphat aus Lithiumhydrogencarbonat, welches aus Lithiumrohmaterialien ohne einer intervenierenden Konvertierung des Lithiumhydrogencarbonats in einen anderen Lithiumbestandteil, beispielsweise durch Ausfällung hergestellt wird.

16. Verwendung eines Verfahrens nach einem der Ansprüche 1 bis 15 zur Erzeugung von kohlenstoffbeschichtetem Lithiummetallphosphat, welches sich als Kathodenmaterial in einer Batterie eignet.

## Revendications

1. Procédé pour produire un phosphate métallique de lithium revêtu de carbone comprenant
- la fourniture d'une solution contenant du bicarbonate de lithium purifié,
- la réaction du bicarbonate de lithium dans la solution avec des ions métalliques, des ions phosphate et une source de carbone pour produire un précipité solide ;
- la séparation des solides et de la solution par séparation solide-liquide ; et
- le traitement thermique des solides pour fournir un phosphate métallique de lithium revêtu de carbone.

2. Procédé selon la revendication 1, dans lequel la solution de bicarbonate de lithium est obtenue par purification d'une composition de carbonate de lithium industrielle en la mettant en contact avec du dioxyde de carbone pour dissoudre du carbonate de lithium en une phase aqueuse en tant que bicarbonate de lithium et facultativement en séparant un quelconque matériau non dissous.

3. Procédé selon la revendication 1 ou 2, dans lequel la solution de bicarbonate de sodium est obtenue
- par dissolution par pression d'un minéral de lithium avec une solution de carbonate de sodium, la solution de bicarbonate de lithium étant récupérée après séparation et purification en utilisant du dioxyde de carbone,
- par extraction d'un minéral de lithium avec un acide minéral pour produire une composition de carbonate de lithium, qui est traitée avec du dioxyde de carbone pour former une solution de bicarbonate de lithium, ou
- par purification d'une solution de carbonate de lithium de qualité industrielle avec du dioxyde de carbone pour former une solution de bicarbonate de lithium de grande pureté.

4. Procédé selon l'une quelconque des revendications précédentes, dans lequel le bicarbonate de lithium est obtenu à partir du spodumène, de la pétalite, de la lépidolite ou de mélanges de ceux-ci, ou de saumures contenant du lithium naturel, en particulier du spodumène.

5. Procédé selon l'une quelconque des revendications précédentes, dans lequel la solution de bicarbonate de lithium est obtenue à partir de la production d'un produit chimique au lithium à partir du spodumène, dans lequel le carbonate de lithium est dissous en solution aqueuse avec du dioxyde de carbone pour permettre la séparation d'analcime et facultativement pour la purification des composés de lithium restants.

6. Procédé selon l'une quelconque des revendications précédentes, dans lequel les ions métalliques sont obtenus à partir de composés sélectionnés à partir du groupe constitué par les phosphates métalliques, les sulfates métalliques, les oxydes métalliques, les nitrates métalliques, les nitrites métalliques, les sulfites métalliques, les halogénures métalliques, les carbonates métalliques et les mélanges de ceux-ci, dans lequel les ions métalliques sont des ions de métaux de transition, de préférence des ions fer, et
dans lequel les ions phosphate sont de préférence obtenus à partir de composés sélectionnés à partir du groupe constitué par les phosphates métalliques, l'acide phosphorique et les mélanges de ceux-ci.

7. Procédé selon l'une quelconque des revendications précédentes, dans lequel la source de carbone est sélectionnée à partir du groupe constitué par le glucose, le fructose, le sucrose, le maltose, le dextrose, le saccharose, l'acide ascorbique, l'acide pantothénique, l'ascorbate de sodium, l'ascorbate de calcium, l'ascorbate de potassium, le palmitate d'ascorbyle, le stéarate d'ascorbyle, l'acide ptéroïque, l'acide paraminobenzoïque, l'acide glutamique, l'acide ptéroylglutamique et les mélanges de ceux-ci,
la source de carbone étant présente en une quantité suffisante pour fournir au phosphate métallique de lithium le revêtement de carbone, en particulier avec tout le carbone du revêtement.

8. Procédé selon l'une quelconque des revendications précédentes, dans lequel la source de carbone est présente en une quantité de 10 à 60 % en poids des ions métalliques, de préférence de 20 à 55 % en poids des ions métalliques, de manière adéquate de 25 à 45 % en poids des ions métalliques, en particulier de 40 % en poids des ions métalliques.

9. Procédé selon l'une quelconque des revendications précédentes, dans lequel la réaction est menée à bien à une température en phase aqueuse à une température en excédent de 130, de préférence à 140-200 °C et dans lequel la réaction est de préférence menée à bien à une pression en excédent de 5 bar, par exemple à une pression dans la plage de 6 à 20 bar, en particulier à une pression de 10 bar.

10. Procédé selon l'une quelconque des revendications précédentes, dans lequel la réaction est menée à bien à un pH en excédent de 7, de préférence à un pH inférieur à 14, typiquement de 7,5 à 12, le pH étant facultativement accru par addition d'un alcali ou d'une base sélectionné à partir du groupe de l'ammoniaque, des hydroxydes métalliques, des oxydes métalliques ou d'un mélange de ceux-ci.

11. Procédé selon l'une quelconque des revendications précédentes, dans lequel la solution séparée contenant du bicarbonate de lithium est purifiée par filtration produisant une solution purifiée contenant du bicarbonate de lithium et des cristaux de carbonate de lithium sont récupérés à partir de la solution purifiée contenant du bicarbonate de lithium par cristallisation.

12. Procédé selon l'une quelconque des revendications précédentes, dans lequel la couverture de carbone sur le phosphate de métal de transition au lithium est caramélisée pendant la réaction pour fournir une couverture de carbone caramélisée, et la couverture de carbone caramélisée est brûlée pendant le traitement thermique à une température en excédent de 400 °C, en particulier en excédent de 500 °C, de manière adéquate en excédent de 600 °C, de manière la plus adéquate à environ 650 °C, typiquement à pas plus de 1 200 °C, pour fournir un phosphate métallique de lithium revêtu de carbone.

13. Procédé selon l'une quelconque des revendications précédentes, dans lequel au moins une, de préférence toutes les étapes consistant à
- fournir une solution contenant du bicarbonate de lithium purifié,
- faire réagir le bicarbonate de lithium dans la solution avec des ions métalliques, des ions phosphate et une source de carbone pour produire un précipité solide,
- séparer les solides et la solution contenant du bicarbonate de lithium par séparation solide-liquide, et facultativement
- traiter thermiquement les solides pour fournir un phosphate métallique de lithium revêtu de carbone,
sont menées à bien sous la forme d'un processus continu.

14. Procédé selon l'une quelconque des revendications précédentes, dans lequel la solution de bicarbonate de lithium est
- obtenue par extraction de matières premières de lithium ou par purification d'une solution de carbonate de lithium de qualité industrielle, et
- la solution de bicarbonate de lithium ainsi obtenue est utilisée en tant que telle, facultativement après purification, pour la préparation d'un phosphate métallique de lithium revêtu de carbone.

15. Procédé selon l'une quelconque des revendications précédentes, dans lequel un phosphate métallique de lithium revêtu de lithium est préparé à partir d'un bicarbonate de lithium obtenu à partir de matières premières de lithium sans faire intervenir une conversion du bicarbonate de lithium en un autre composé de lithium, par exemple par précipitation.

16. Utilisation d'un procédé selon l'une quelconque des revendications 1 à 15 pour produire un phosphate métallique de lithium revêtu de carbone adéquat en tant que matériau pour cathode dans une batterie.
